# EUROPÄISCHE PATENTSCHRIFT

(11) **EP 1 550 239 B1**
(45) Veröffentlichungstag und Bekanntmachung des Hinweises auf die Patenterteilung: **07.03.2012**
(21) Anmeldenummer: 03753514.3
(22) Anmeldetag: 07.10.2003
(51) Int. Cl.: H04B 7/12

(54) **VERFAHREN ZUM ÜBERTRAGEN EINES DATENPROTOKOLLS AUF EINER HF-FUNKSTRECKE**
METHOD FOR TRANSMITTING A DATA PROTOCOL ON A HF RADIO LINK
PROCEDE POUR TRANSMETTRE UN PROTOCOLE DE DONNEES SUR UNE LIAISON RADIO HF

(30) Priorität: 09.10.2002 DE 10247149
(43) Veröffentlichungstag der Anmeldung: 06.07.2005
(73) Patentinhaber: Leopold Kostal GmbH & Co. KG, 58507 Lüdenscheid (DE)
(72) Erfinder: PRETZLAFF, Volker, 58093 Hagen (DE); FROMM, Michael, 44289 Dortmund (DE); VENS, Rainer, 44139 Dortmund (DE); VOGELS, Paul, 44227 Dortmund (DE)
(86) Internationale Anmeldenummer: PCT/EP2003/011051
(87) Internationale Veröffentlichungsnummer: WO 2004/036788

(56) Entgegenhaltungen:
- EP-A- 1 045 531
- DE-A- 19 905 158
- US-B1- 6 188 447
- US-B1- 6 327 299

## Beschreibung

Die Erfindung betrifft ein Verfahren zum Übertragen eines Datenprotokolls auf einer HF-Funkstrecke zwischen einem das Datenprotokoll übermittelnden, mikroprozessorgesteuerten Sender und einem das Datenprotokoll empfangenden, ebenfalls mikroprozessorgesteuerten Empfänger.

In zunehmenden Maße werden Telemetriesysteme in Kraftfahrzeugen eingesetzt. Zu diesen Systemen gehören beispielsweise schlüssellose Nutzungsberechtigungskontrollen, wie etwa eine schlüssellose Zugangsberechtigungskontrolle oder eine schlüssellose Fahrberechtigungskontrolle. Bei diesen Kontrollverfahren wird eine bidirektionale Datenkommunikation auf einer HF-Funkstrecke zwischen einer kraftfahrzeugseitigen Sende-Empfangseinrichtung und einem mobilen, als Transponder ausgebildeten und von einem Benutzer mitgeführten Identifikationsgeber durchgeführt. Zwischen den beiden Einheiten - Sende-Empfangseinrichtung des Kraftfahrzeuges und mobiler Identifikationsgeber - werden unter anderem sicherheitsrelevante Identifikationscodes beispielsweise übermittelt.

Als weitere Telemetriesysteme werden bei Kraftfahrzeugen beispielsweise Reifendruckkontrollsysteme eingesetzt. Bei diesen Systemen erfolgt eine Signalübermittlung von einem am Rad befindlichen Sensor an eine Auswerteeinheit ebenfalls auf einer HF-Funkstrecke. Die kraftfahrzeugeigenen Telemetriesysteme und auch solche außerhalb des Kraftfahrzeugs befindliche benutzen vielfach eine Frequenz innerhalb der freien Bänder, beispielsweise innerhalb des ISM-Bandes. Daher kann das Potential der Gleichkanalstörer bei der Übermittlung eines Datenprotokolls relativ groß sein. Störungen auf der Funkstrecke führen dazu, dass das gesendete. Datenprotokoll von dem jeweilig anderen Teilnehmer - etwa kraftfahrzeugseitige Sende-Empfangseinrichtung oder Identifikationsgeber - zerstückelt, geändert oder unvollständig empfangen wird, mit der Folge, dass die gewünschte Aktion, beispielsweise das gewünschte Öffnen bzw. Entriegeln einer Türe eines Kraftfahrzeuges nicht ausgeführt wird. Bei Funkfernbedienungen, bei denen der Abfragedialog durch eine manuelle Betätigung eines Tasters des Identifikationsgebers ausgelöst wird, kann dagegen ohne weiteres bei Feststellen, dass ein erster Auslösevorgang nicht zu dem gewünschten Erfolg geführt hat, dieser quasi beliebig wiederholt werden. Bei passiven Zugangsberechtigungssystemen, bei denen der Abfragedialog zwischen der kraftfahrzeugseitigen Sende-Empfangseinrichtung und dem Identifikationsgeber in Abhängigkeit von dem Vorliegen bestimmter Parameter, beispielsweise dem Eintritt des Identifikationsgebers in einen Nahempfangsbereich zum Kraftfahrzeug ausgelöst wird, ist dieses nicht möglich. Diese Systeme gestatten keinen benutzerseitigen Eingriff dahingehend, wie häufig ein Datenprotokoll gesendet werden kann, um störungsfrei empfangen zu werden. Zur Erhöhung der Manipulationssicherheit sperren diese Systeme in aller Regel nach dem Empfang von Störungen. Bei Vorliegen von solchen Gleichkanalstörem kann bei Einsatz eines solchen Systems bei dem beschriebenen Beispiel der gewünschte Zutritt zum Kraftfahrzeug nicht erfolgen; dieser ist dann nur manuell möglich.

Dieselbe Problematik tritt auch im Betrieb des Kraftfahrzeuges auf, wenn mehrere Telemetriesysteme gleichzeitig arbeiten, beispielsweise ein Fahrberechtigungskontrollverfahren und ein Reifendrucküberprüfungsverfahren. Insbesondere bei einem Empfang von zeitkritischen Datenprotokollen ist es erforderlich, dass dieses in dem bereitgestellten Zeitfenster empfangen wird. Zeitkritische Datenprotokolle werden im Rahmen einer Erhöhung der Manipulationssicherheit eingesetzt. Der zunehmende Einsatz von Telemetriesystemen, die in aller Regel in einer freien Frequenz arbeiten - nämlich zumeist innerhalb des ISM-Bandes - bedingt, dass eine bestimmungsgemäße Kommunikation zwischen den Teilnehmern der einzelnen Telemetriesysteme nicht immer gewährleistet werden kann.

Um Störungen und Interferenzen beim Empfang von Funkverbindungen insbesondere bei beweglichen Empfängern zu vermeiden oder zu verringern, ist es bekannt Frequenzdiversity zu verwenden, also die gleiche Information auf unterschiedlichen Trägerfrequenzen zu übertragen.

Die EP 1 045 531 A1 und die DE 199 05 158 A1 offenbaren in diesem Zusammenhang Frequenzdiversity-Einrichtungen bei denen ein aus mehreren auf unterschiedlichen Kanälen empfangenen Signalen gebildetes kombiniertes Signal verarbeitet wird.

Die US-Patentschriften 6,188,447 und 6,327,299 zeigen Systeme, bei denen in Abhängigkeit von Qualitätskriterien jeweils eine erste oder zweite Frequenz, bzw. das auf dieser übermittelte Signal zur weiteren Auswertung ausgewählt wird.

Ausgehend von diesem diskutierten Stand der Technik liegt der Erfindung daher die Aufgabe zugrunde, ein eingangs genanntes, gattungsgemäßes Verfahren zum Übertragen eines Datenprotokolls auf einer HF-Funkstrecke dergestalt weiterzubilden, dass dieses gegenüber Gleichkanalstöreinflüssen unempfindlicher ist.

Diese Aufgabe wird erfindungsgemäß dadurch gelöst, dass das Datenprotokoll auf zwei oder mehr Trägern jeweils unterschiedlicher Frequenz gesendet wird und empfangsseitig in Abhängigkeit von einem oder mehreren, die Qualität und/oder die Vollständigkeit des jeweils empfangenen Datenprotokolls wiedergebenden Auswahlkriterien das auf der einen Frequenz empfangene oder das auf einer anderen Frequenz empfangene oder das auf den zumindest zwei Frequenzen empfangene Datenprotokoll ausgewertet wird, wobei sich die Frequenzen (fCTX1, fCTX2), auf denen die Datenprotokolle gesendet werden, durch ganzzahlige Vielfache voneinander unterscheiden.

Bei diesem Verfahren wird die benötigte Information - das Datenprotokoll - auf zumindest zwei Trägern unterschiedlicher Frequenz von dem eine Information sendenden Teilnehmer eines Telemetriesystems bereitgestellt. Der mit diesem sendenden Teilnehmer kommunizierende weitere Teilnehmer verfügt über eine Empfangseinheit, die die Datenprotokolle auf den jeweiligen Frequenzen empfangen kann. Gesteuert ist diese Empfangseinheit durch einen Mikroprozessor, wobei vorgesehen ist, dass ein empfangenes Datenprotokoll zur Auswertung gelangt, wenn dieses bestimmten Auswahlkriterien hinsichtlich der Empfangsqualität und/oder der Vollständigkeit des empfangenen Datenprotokolls genügt. Für den Fall, dass ein Datenprotokoll auf der einen Frequenz diesen Auswahlkriterien nicht genügt, dann wird das auf der anderen Frequenz gesendete Datenprotokoll untersucht. Die Wahrscheinlichkeit, dass auf allen im Rahmen dieses Verfahrens genutzten Frequenzen Störungen vorliegen, ist sehr gering, so dass mit sehr hoher Wahrscheinlichkeit nach einem einmaligen Sendevorgang die gewünschte Übermittlung des Datenprotokolls erfolgreich abgeschlossen werden kann. Jedes in den unterschiedlichen Frequenzen gesendete Datenprotokoll ist für sich vollständig und beinhaltet die gesamte zu übermittelnde Information. Für die nachgeschaltete empfängerseitige Auswertung ist es letztendlich gleichgültig, ob das Datenprotokoll über den einen Frequenzkanal oder den anderen Frequenzkanal empfangen worden ist. Daher ist es grundsätzlich ebenfalls für den höchst unwahrscheinlichen Fall einer Störung auf allen Kanälen möglich, unterschiedliche Protokollteile der einzelnen empfangenen Datensignale zum Zusammenstellen bzw. Rekonstruieren des tatsächlich gesendeten Datenprotokolls zu benutzen.

Besonders bevorzugt wird ein solches Verfahren bei solchen Telemetriesystemen eingesetzt, bei denen sicherheitsrelevante und/oder zeitkritische Informationen übermittelt werden. Daher eignet sich dieses Verfahren insbesondere für einen Einsatz im Rahmen von Nutzungsberechtigungskontrollverfahren, wie beispielsweise einer schlüssellosen Zugangsberechtigungskontrolle und/oder im Rahmen eines Fahrberechtigungskontrollverfahrens bei einem Kraftfahrzeug.

Zweckmäßigerweise unterscheiden sich die Frequenzen der Träger zum Senden der Datenprotokolle durch ganzzahlige Vielfache voneinander. Es ist dann auf einfache Weise möglich, einen einzigen Sender einzusetzen, der in einer ersten Sendephase das Datenprotokoll in einem ersten Frequenzkanal und anschließend in einem weiteren Frequenzkanal sendet. Bei einer solchen Ausgestaltung würden die Datenprotokolle zeitlich versetzt und zwar nacheinander gesendet werden. Dabei kann vorgesehen sein, dass vorgegeben ist, mit welcher Frequenz zuerst gesendet wird oder auch, dass grundsätzlich eine zufällige Auswahl erfolgt. Die Verwendung von Trägerfrequenzen, die sich durch ganzzahlige Vielfache voneinander unterscheiden, hat bei Einsatz lediglich eines einzigen Senders auch den Vorteil, dass grundsätzlich die beim Senden sich immanent einstellende Harmonische genutzt werden kann, um auf dieser das Datenprotokoll aufzumodullieren mit der Folge, dass in diesem Fall auf beiden Trägerfrequenzen das Datenprotokoll gleichzeitig gesendet wird. Empfängerseitig müßte dann sichergestellt sein, dass die gleichzeitig gesendeten Datenprotokolle auch gleichzeitig empfangen werden können, etwa durch Einsatz von zwei Empfängern.

Zum Bereitstellen der unterschiedlichen Frequenzen können naturgemäß auch mehrere Sender eingesetzt sein. Empfängerseitig ist es zweckmäßig, vor der Demodulation der empfangenen Datenprotokolle die empfangenen Signale im Hinblick auf die Empfangsfrequenzen einer Filterung zu unterwerfen.

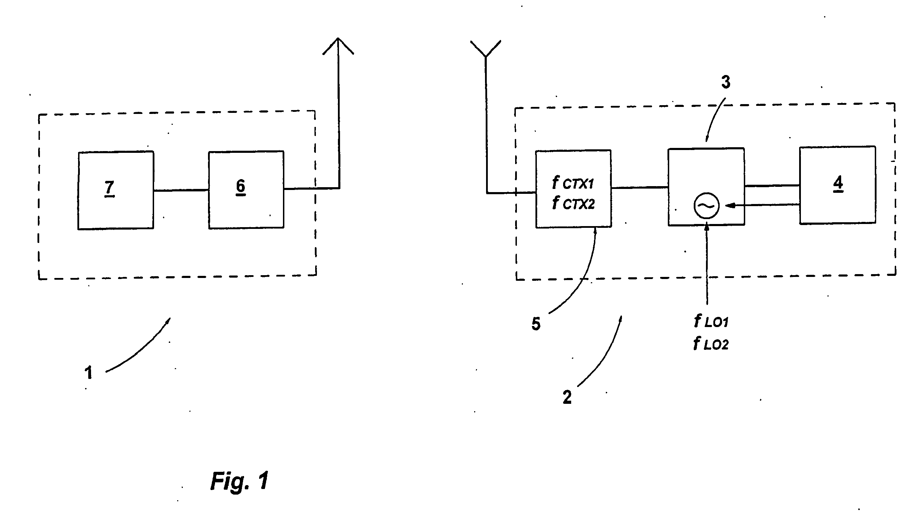

Nachfolgend ist die Erfindung anhand eines Ausführungsbeispiels unter Bezugnahme auf die beigefügte **Figur 1** beschrieben. Figur 1 zeigt schematisiert einen Teil eines Telemetriesystems eines Kraftfahrzeuges, das im Rahmen einer schlüssellosen Nutzungsberechtigungskontrolle eingesetzt wird. Das Telemetriesystem umfaßt einen Sender 1, der ein Datenprotokoll auf zwei Frequenzen senden kann. Der Sender 1 ist ausgebildet, um auf einer ersten Frequenz f_{CTX1}, etwa 434,175 MHz, und auf einer weiteren *f*_{CTX2}, etwa 868, 35 MHz, zu senden. Die beiden Frequenzen *f*_{CTX1} und *f*_{CTX2} unterscheiden sich durch ein ganzzahliges Vielfaches entsprechend der Gleichung *f*_{CTX2} = *f*_{CTX1} x 2. Der Sender 1 ist beispielsweise Teil einer kraftfahrzeugseitigen und weitere Elemente umfassenden Sende-Empfangseinrichtung zum Durchführen des genannten schlüssellosen Nutzungsberechtigungskontrollverfahrens.

Der Sender 1 kommuniziert mit einem Empfänger 2, dessen Empfangsmodul 3 über eine von einem Prozessor 4 bezüglich seiner Empfangsfrequenzen umgeschaltet werden kann. Dem Empfängermodul 3 des Empfängers 2 vorgeschaltet ist ein Dualbandfilter 5 zum Filtern des Frequenzspektrums hinsichtlich der beiden von dem Sender 1 gesendeten Frequenzen *f*_{CTX1}, *f*_{CTX2}.

Das von dem Sender 1 zu übermittelnde Datenprotokoll wird auf den beiden Frequenzen *f*_{CTX1}, *f*_{CTX2} nacheinander gesendet. Die dazu notwendige Umschaltung des Sendemoduls 6 erfolgt durch einen Mikroprozessor 7. Der Inhalt der beiden Datenprotokolle ist identisch.

Bei dem dargestellten Ausführungsbeispiel ist vorgesehen, dass der Sender 1 bei jeder Übermittlung eines Datenprotokolls dieses zuerst auf der Frequenz *f*_{CTX1} und anschließend auf der Frequenz *f*_{CTX2} sendet. Entsprechend ist die Empfangsbereitschaft des Empfängers 2 geschaltet, die nach dem Abschluß eines Empfangs eines jeden Datenprotokolls die Empfangsbereitschaft auf die Frequenz *f*_{CTX1} stellt. Somit wird auch von dem Empfänger 2 zunächst das Datenprotokoll auf der Frequenz *f*_{CTX1} empfangen. Für den Fall, dass empfängerseitig festgestellt worden ist, dass das empfangene Datenprotokoll ungestört und somit vollständig empfangen worden ist, wird dieses inhaltlich ausgewertet. Die notwendige Intelligenz zum Bereitstellen der Auswahlkriterien und der anschließenden inhaltlichen Auswertung ist durch den Mikroprozessor 4 bereitgestellt. Eine Auswertung des anschließend empfangenen Datenprotokolls auf der Frequenz *f*_{CTX2} ist dann grundsätzlich nicht mehr notwendig. Für den Fall jedoch, dass das auf der Frequenz *f*_{CTX1} empfangene Datenprotokoll den Auswahlkriterien nicht genügt und somit unvollständig oder gestört ist, steuert der Mikroprozessor 4 das Empfangsmodul 3 zum Empfang des Datenprotokolls auf der Frequenz *f*_{CTX2} um. Dies erfolgt im Wege einer Oszillatorumschaltung. Mit sehr hoher Wahrscheinlichkeit ist das auf der anderen Frequenz *f*_{CTX2} empfangene Datenprotokoll ungestört.

Lediglich für den Fall, dass auch das zweite Datenprotokoll dem Auswahlkriterium bzw. den Auswahlkriterien hinsichtlich seiner Empfangsqualität nicht genügt, können die beiden gestört empfangenen Datenprotokolle daraufhin untersucht werden, ob sich gegebenenfalls in einer Zusammenschau dieser Datenprotokolle ein vollständig und ungestörtes Datenprotokoll rekonstruieren läßt.

Um eine bidirektionale Kommunikation im Rahmen eines solchen Telemetriesystems bereitzustellen, kann sowohl der den Sender 1 beinhaltende Teilnehmer über einen Empfänger entsprechend dem beschriebenen und der dem beschriebenen Empfänger zugeordnete Teilnehmer über einen Sender wie beschrieben verfügen.

### Bezugszeichenliste

- 1: Sender
- 2: Empfänger
- 3: Empfangsmodul
- 4: Mikroprozessor
- 5: Dualbandfilter
- 6: Sendemodul
- 7: Mikroprozessor

## Patentansprüche

1. Verfahren zum Übertragen eines Datenprotokolls auf einer HF-Funkstrecke zwischen einem das Datenprotokoll übermittelnden, mikroprozessorgesteuerten Sender (1) und einem das Datenprotokoll empfangenden, ebenfalls mikroprozessorgesteuerten Empfänger, **dadurch gekennzeichnet, dass** das Datenprotokoll auf zwei oder mehr Trägern jeweils unterschiedlicher Frequenz (*f*_{CTX1}, *f*_{CTX2},) gesendet wird und empfangsseitig in Abhängigkeit von einem oder mehreren, die Qualität und/oder die Vollständigkeit des jeweils empfangenen Datenprotokolls wiedergebenden Auswahlkriterien das auf der einen Frequenz *(f_{CTX1})* empfangene oder das auf einer anderen Frequenz (*f*_{CTX2}) empfangene oder das auf den zumindest zwei Frequenzen (*f*_{CTX1}, *f*_{CTX2}) empfangene Datenprotokoll ausgewertet wird, wobei sich die Frequenzen (*f*_{CTX1}, *f*_{CTX2}), auf denen die Datenprotokolle gesendet werden, durch ganzzahlige Vielfache voneinander unterscheiden.

2. Verfahren nach Anspruch 1, **dadurch gekennzeichnet, dass** das Datenprotokoll in den zumindest zwei Frequenzen gleichzeitig gesendet wird.

3. Verfahren nach Anspruch 2, **dadurch gekennzeichnet, dass** die in dem Datenprotokoll enthaltene Information einer Grundfrequenz sowie der diese Grundfrequenz zugeordneten Harmonischen aufmoduliert wird.

4. Verfahren nach Anspruch 1, **dadurch gekennzeichnet, dass** das Datenprotokoll in den zumindest zwei Frequenzen zeitlich versetzt zueinander gesendet wird.

5. Verfahren nach Anspruch 4, **dadurch gekennzeichnet, dass** das Datenprotokoll in den zumindest zwei Frequenzen nacheinander gesendet wird.

6. Verfahren nach Anspruch 5, **dadurch gekennzeichnet, dass** die Sendefrequenz des Senders zwischen einer Übertragung des Datenprotokolls auf einer ersten Frequenz und einer Übertragung des Datenprotokolls auf einer zweiten Frequenz umgeschaltet wird.

7. Verfahren nach Anspruch 5 oder 6, **dadurch gekennzeichnet, dass** der Oszillator des Empfängers (2) zwischen den in den zumindest zwei Frequenzen (*f*_{CTX1}, *f*_{CTX2}) gesendeten Datenprotokollen mikroprozessorgesteuert umgeschaltet wird.

8. Verfahren nach einem der Ansprüche 1 bis 7, **dadurch gekennzeichnet, dass** vor einer Demodulation der empfangenen Datenprotokolle die empfangenen Signale im Hinblick auf die Frequenzen, auf denen die Datenprotokolle gesendet werden, gefiltert werden.

9. Verfahren nach einem der Ansprüche 1 bis 8, **dadurch gekennzeichnet, dass** vor einem Senden der Datenprotokolle die Verfügbarkeit der Nutzkanäle im Hinblick auf einen ungestörten Empfang der gesendeten Datenprotokolle hin überprüft wird.

10. Verfahren nach einem der Ansprüche 1 bis 9, **dadurch gekennzeichnet, dass** dieses im Rahmen von telemetrischen Anwendungen in einem Kraftfahrzeug zum Einsatz gelangt.

11. Verfahren nach Anspruch 10, **dadurch gekennzeichnet, dass** das Verfahren im Rahmen einer Nutzungsberechtigungskontrolle durchgeführt wird.

## Claims

1. Process for communicating a data log along an HF radio link between a microprocessor-controlled transmitter (1) that transmits the data log and a receiver, which is likewise microprocessor-controlled, that receives the data log, **characterised in that** the data log is transmitted on two or more carriers, each having a different frequency (*f*_{*CTX*1}, *f*_{*CTX*2}), and is evaluated at the receiving end in dependence on one or more selection criteria reflecting the quality and/or the completeness of the respective data log which is received on the one frequency (*f_{CTX1}*) or which is received on another frequency (*f_{CTX2}*) or which is received on the at least two frequencies (f_{CTX1}, f_{CTX2}), with the frequencies (*f_{CTX1}*, *f_{CTX2}*) on which the data logs are transmitted differing from each other by integer multiples.

2. Process in accordance with Claim 1, **characterised in that** the data log is transmitted simultaneously in the at least two frequencies.

3. Process in accordance with Claim 2, **characterised in that** the information contained in the data log is modulated to a basic frequency and to the harmonics assigned to this basic frequency.

4. Process in accordance with Claim 1, **characterised in that** the data log is transmitted in the at least two frequencies at chronologically staggered intervals from each other.

5. Process in accordance with Claim 4, **characterised in that** the data log is transmitted in the at least two frequencies successively to each other.

6. Process in accordance with Claim 5, **characterised in that** the transmission frequency of the transmitter is switched between a communication of the data log on a first frequency and a communication of the data log on a second frequency.

7. Process in accordance with either of Claims 5 or 6, **characterised in that** the oscillator of the receiver (2) is switched between the data logs transmitted in the at least two frequencies (*f_{CTX1}, f*_{CTX2}) in a data processor-controlled manner.

8. Process in accordance with any of Claims 1 to 7, **characterised in that**, prior to demodulating the received data logs, the received signals are filtered in respect of the frequencies on which the data logs are transmitted.

9. Process in accordance with any of Claims 1 to 8, **characterised in that**, prior to a transmission of the data logs, the availability of the user channels is reviewed in respect of an uninterrupted receipt of the transmitted data log.

10. Process in accordance with any of Claims 1 to 9, **characterised in that** the same is put to use within the scope of telemetric applications in a motor vehicle.

11. Process in accordance with Claim 10, **characterised in that** the process is implemented within the scope of a usage authorisation check.

## Revendications

1. Procédé pour la transmission d'un protocole de données sur une liaison radio HF, entre un émetteur (1) commandé par microprocesseur, qui transmet ledit protocole de données, et un récepteur, également commandé par microprocesseur, qui reçoit le protocole de données, **caractérisé en ce que** le protocole de données est émis sur deux ou plusieurs supports, respectivement de fréquence différente (*f*_{*CTX*1}, *f_{CTX2}*) et que, côté récepteur, le protocole de données, reçu sur l'une des fréquences (*f*_{*CTX*1}), ou le protocole de données reçu sur l'autre fréquence (*f*_{*CTX*2}), ou le protocole de données reçu sur les deux fréquences (*f*_{*CTX*1}, *f_{CTX2}*) au moins présentes, est évalué en fonction d'un ou de plusieurs critères de sélection, qui expriment la qualité et / ou l'intégralité du protocole de données respectif, sachant que les fréquences (*f*_{*CTX*1}, *f*_{*CTX*2}), sur lesquelles les protocole de données sont émis, diffèrent l'une de l'autre de multiples entiers.

2. Procédé selon la revendication 1, **caractérisé en ce que** le protocole de données est émis simultanément sur les deux fréquences au moins présentes.

3. Procédé selon la revendication 2, **caractérisé en ce que** l'information d'une fréquence de base, ainsi que de l'harmonique associée, contenue dans le protocole de données, est modulée.

4. Procédé selon la revendication 1, **caractérisé en ce que** le protocole de données est émis sur les deux fréquences au moins présentes, avec décalage temporel.

5. Procédé selon la revendication 4, **caractérisé en ce que** le protocole de données est émis successivement sur les deux fréquences au moins présentes.

6. Procédé selon la revendication 5, **caractérisé en ce que** la fréquence d'émission de l'émetteur est commutée entre une transmission du protocole de données sur une première fréquence et une transmission du protocole de données sur une deuxième fréquence.

7. Procédé selon revendication 5 ou 6, **caractérisé en ce que** l'oscillateur du récepteur (2) est commuté, commandé par microprocesseur, entre les protocoles de données émis sur les deux fréquences (*f*_{*CTX*1}, *f_{CTX2}*) au moins présentes.

8. Procédé selon l'une des revendications 1 à 7, **caractérisé en ce que**, avant démodulation du protocole de données, les signaux reçus sont filtrés quant aux fréquences, sur lesquelles les protocoles de données sont émis.

9. Procédé selon l'une des revendications 1 à 8, **caractérisé en ce que** la disponibilité des canaux utiles est vérifiée avant l'émission du protocole de données, quant à une réception sans perturbations des protocoles de données émis.

10. Procédé selon l'une des revendications 1 à 9, **caractérisé en ce que** celui-ci est mis en oeuvre, dans un véhicule automobile, dans le cadre d'applications télémétriques.

11. Procédé selon la revendication 10, **caractérisé en ce que** ledit procédé est effectué dans le cadre d'un contrôle de la justification d'utilisation.
